# EUROPEAN PATENT SPECIFICATION

(11) **EP 3 223 275 B1**
(45) Date of publication and mention of the grant of the patent: **10.07.2019**
(21) Application number: 15860790.3
(22) Date of filing: 20.11.2015
(51) Int. Cl.: G10L 15/26, G06F 17/28, G10L 15/08, G06F 3/16

(54) **INFORMATION TRANSMISSION DEVICE, INFORMATION TRANSMISSION METHOD, GUIDE SYSTEM, AND COMMUNICATION SYSTEM**
INFORMATIONSÜBERTRAGUNGSVORRICHTUNG, INFORMATIONSÜBERTRAGUNGSVERFAHREN, FÜHRUNGSSYSTEM UND KOMMUNIKATIONSSYSTEM
DISPOSITIF DE TRANSMISSION D'INFORMATIONS, PROCÉDÉ DE TRANSMISSION D'INFORMATIONS, SYSTÈME DE GUIDAGE, ET SYSTÈME DE COMMUNICATION

(30) Priority: 20.11.2014 JP 2014235622
(43) Date of publication of application: 27.09.2017
(73) Proprietor: Yamaha Corporation, Hamamatsu-shi, Shizuoka 430-8650 (JP)
(72) Inventor: MORIGUCHI, Shota, Hamamatsu-shi, Shizuoka 430-8650 (JP); SETO, Yuki, Hamamatsu-shi, Shizuoka 430-8650 (JP)
(74) Representative: Hoffmann Eitle
(86) International application number: PCT/JP2015/082765
(87) International publication number: WO 2016/080535

(56) References cited:
- EP-A2- 1 267 590
- WO-A1-2010/016589
- JP-A- 2002 297 177
- JP-A- 2004 164 589
- JP-A- 2010 003 219
- US-A1- 2004 243 392
- US-A1- 2011 150 240
- US-B1- 8 798 995

## Description

### Technical Field

The present invention relates to a technology for reproducing contents, such as images or voices, in a terminal device.

### Background Art

Voice recognition technologies for recognizing phrases contained in voices represented by voice signals have been proposed. For example, Patent Literature 1 discloses a mobile terminal device having a function of displaying the phrase (character string) recognized from a voice signal.

### Citation List

### Patent Literature

Patent Literature 1: JP-A-2003-051776

EP 1267590 A2 describes a contents presenting system which includes: an analyzing unit for collecting and analyzing user's conversation to output an analysis result; a contents acquiring unit for acquiring contents from a contents database based on the analysis result; and a contents presenting unit for presenting the acquired contents to the user. Since the analysis result of user's conversation includes a factor representing the environment where the user is talking, by determining contents based on the analysis result, it is possible to provide the contents which is suited for the environment where the user is present. The analysis result may be detection of a music piece name in the user's conversation, where the music piece is the acquired contents presented to the user.

### Summary of Invention

### Technical Problem

With the use of the terminal device capable of carrying out voice recognition as described in Patent Literature 1, for example, after the guide voice to be broadcast in a means of transportation, such as an electric train or a bus, is collected by the terminal device, a phrase is recognized, whereby the content, such as an image, corresponding to the phrase can be reproduced by the terminal device. However, in order to collect the guide voice emitted from a sound emission device with an SN ratio required for the voice recognition, the user is required to bring his/her terminal device sufficiently close to the sound emission device for emitting the guide voice. Furthermore, in a situation in which the time when the guide voice is emitted is indefinite, the user is required to stand by in a state in which his/her terminal device is brought close to the sound emission device for a long time until the guide voice desired by the user is actually broadcast, whereby a problem of increasing the burden on the user of the terminal device occurs. In consideration of the circumstances described above, the present invention has an object, but not limited thereto, of reducing the burden on the user who reproduces the content using the terminal device.

### Solution to Problem

The present invention provides a guide system according to claim 1.

The present invention further provides an information transmission method according to claim 9.

The present invention further provides a communication system according to claim 10.

The present invention further provides a vehicle according to claim 11.

### Brief Description of Drawings

Fig. 1 is a configuration diagram showing a guide system according to a first embodiment of the present invention;
Fig. 2 is a configuration diagram showing a terminal device;
Fig. 3 is a configuration diagram showing a voice guide device and an information transmission device;
Fig. 4 is a schematic view representing registration information;
Fig. 5 is a flow chart showing the action of the information transmission device;
Fig. 6 is an explanatory view showing a second embodiment;
Fig. 7 is a configuration diagram showing a guide system according to a third embodiment;
Fig. 8 is a flow chart showing the action of a registration processing section according to the third embodiment; and
Fig. 9 is a configuration diagram showing a guide system according to a fourth embodiment.

### Detailed Description

The invention is defined in the appended claims. All following occurrences of the word "embodiment(s)", if referring to feature combinations different from those defined by the independent claims, refer to examples which were originally filed but which do not represent embodiments of the presently claimed invention; these examples are still shown for illustrative purposes only.

An information transmission device as described herein includes voice recognizing means for recognizing a phrase of voice represented by a voice signal; information specifying means for specifying identification information item corresponding to the phrase recognized by the voice recognizing means from a plurality of identification information items corresponding to mutually different phrases; and transmitting means for transmitting the identification information item specified by the information specifying means to a terminal device capable of reproducing a content represented by the identification information item. With the above-mentioned configuration, the identification information item corresponding to the phrase recognized from the voice signal is transmitted to the terminal device. Hence, the user is not required to bring his/her terminal device close to a sound emission device in order to collect the voice with a sufficient SN ratio, and the user is not required to stand by in a state in which his/her terminal device is brought close to the sound emission device until the voice is emitted. In other words, the burden on the user who reproduces the content using the terminal device can be reduced.

In a mode as described herein, the information specifying means refers to registration information in which a plurality of identification information items correspond to a plurality of phrases having been registered in advance, and in a case where the voice recognizing means recognizes any one of the plurality of phrases having been registered in the registration information, the information specifying means specifies the identification information item corresponding to the phrase from the registration information. The above-mentioned mode is advantageous in that the necessity of transmitting the identification information item can be judged easily by the transmission of the registration information.

In another mode, the voice recognizing means recognizes the phrase of the voice represented by the voice signal supplied to a sound emission device from a sound collection device installed in a moving body that moves while accommodating the terminal devices. With the above-mentioned mode, since the voice recognizing means carries out voice recognition for the voice signal to be supplied from the sound collection device to the sound emission device, highly accurate voice recognition is achieved in comparison with, for example, a configuration in which voice recognition is carried out by collecting the voice emitted from the sound emission device.

The information transmission device according to another mode includes registration processing means for transmitting the content representing the phrase recognized by the voice recognizing means and the identification information item corresponding to the phrase to a distribution device that provides, to the terminal device, the content corresponding to the identification information item requested by the terminal device. In the above-mentioned mode, the content representing the phrase recognized from the voice signal is registered in the distribution device and then transmitted to the terminal device, whereby the mode is advantageous in that various contents corresponding to the voice signal, other than the contents having been registered in advance, can be provided promptly to the terminal device.

In another mode, short-range radio communication is a sound communication in which sound is used as a transmission medium. In the above-mentioned mode, since the identification information item is transmitted by the sound communication in which sound is used as a transmission medium, the mode is advantageous in that the reaching range of the identification information item can be controlled easily by adjusting the volume of the sound; furthermore, since the sound is emitted in a wide range, the mode is advantageous in that the identification information item can be transmitted to a plurality of terminal devices collectively.

In another mode, the voice signal contains a guide voice to be used for voice guide given from a manager to a user. In the above-mentioned mode, for example, after the guide voice to be broadcast in a means of transportation, such as an electric train or a bus, is collected by the terminal device, a phrase is recognized, whereby the mode is advantageous in that the content, such as an image, corresponding to the phrase can be reproduced by the terminal device.

In another mode, the content contains representation of information obtained by translating the pronunciation content of the guide voice into another language. In the above-mentioned mode, for example, after the guide voice to be broadcast in a means of transportation, such as an electric train or a bus, is collected by the terminal device, the phrase is recognized, whereby the mode is advantageous in that the characters and voice obtained by translating the phrase into another language can be reproduced by the terminal device.

In another mode, the transmitting means transmits the identification information item after the voice recognizing means has recognized the phrase and before an end of reproduction of the guide voice. The above-mentioned mode is advantageous in that the content corresponding to the identification information item can be reproduced, for example, in real time, by the terminal device.

In another mode, the transmitting means transmits the identification information item after an end of reproduction of the guide voice. The above-mentioned mode is advantageous in that the content corresponding to the identification information item can be reproduced by the terminal device after the end of the reproduction of the guide voice.

An information transmission method according to another mode includes recognizing a phrase of voice represented by a voice signal; specifying identification information item corresponding to the recognized phrase from a plurality of identification information items corresponding to mutually different phrases; and transmitting the specified identification information item to a terminal device capable of reproducing a content represented by the identification information item. With the above-mentioned embodiment, the identification information item corresponding to the phrase recognized from the voice signal is transmitted to the terminal device. Hence, the user is not required to bring his/her terminal device close to a sound emission device in order to collect the voice with a sufficient SN ratio, and the user is not required to stand by in a state in which his/her terminal device is brought close to the sound emission device until the voice is emitted. In other words, the burden on the user who reproduces the content using the terminal device can be reduced.

A guide system according to another mode is a guide system including the above-mentioned information transmission device and a voice guide device, wherein the voice guide device includes a sound collection device and a sound emission device for collecting a sound signal and for emitting sound, respectively, and the voice recognizing means of the information processing device recognizes the phrase of the voice represented by the voice signal supplied from the sound collection device to the sound emission device.

A communication system according to another mode is a communication system including the above-mentioned guide system and a terminal device, wherein the terminal device includes receiving means for receiving the identification information item from the transmitting means of the information transmission device and a reproduction device for reproducing the content corresponding to the identification information item. The terminal device according to each mode described above is achieved by using dedicated electronic circuits, and is also achieved by the cooperation of a general-purpose arithmetic operation device, such as a CPU (central processing unit), and programs. The programs can be provided in the form stored on a computer-readable recording medium and can be installed in the computer. The recording medium is, for example, a non-transitory recording medium, and an optical recording medium (optical disc), such as a CD-ROM, is taken as a good example; however, the recording medium can include a known recording medium of an arbitrary form, such as a semiconductor recording medium or a magnetic recording medium. Furthermore, for example, the programs can be provided to a computer via a communication network in a distribution form and can be installed in the computer. Moreover, there is also described a method (information transmission method) for operating the information transmission device according to each of the above-mentioned modes.

### <First embodiment>

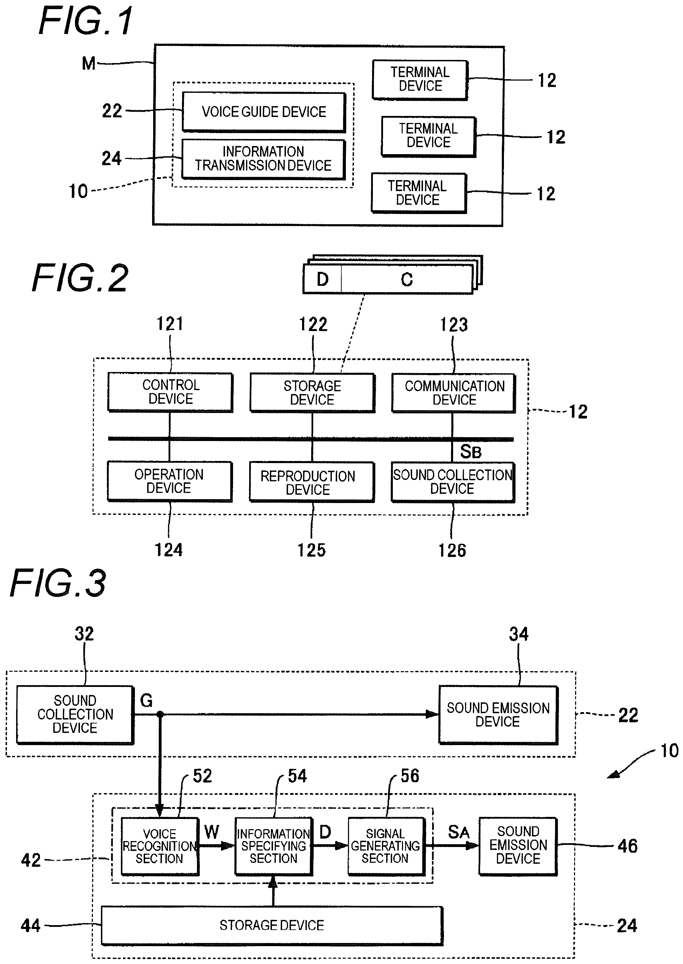

Fig. 1 is a configuration diagram showing a guide system 10 according to a first embodiment. The guide system 10 according to the first embodiment is a sound system installed in a vehicle (moving body) M serving as a means of transportation, such as an electric train or a bus, moving in a state of accommodating a plurality of users, and is used for various kinds of voice guide (for example, guide regarding vehicle getting-on/off and transfer, fare, sightseeing, etc.) for the users. Each user in the vehicle M carries a mobile terminal device 12, such as a mobile phone or a smart phone. The guide system 10 and the terminal device 12 are sometimes collectively referred to as a communication system.

Fig. 2 is a configuration diagram showing an arbitrary single terminal device 12. As exemplified in Fig. 2, the terminal device 12 according to the first embodiment is equipped with a control device 121, a storage device 122, a communication device 123, an operation device 124, a reproduction device 125, and a sound collection device 126. The control device 121 executes programs stored in the storage device 122, thereby carrying out various kinds of operation processing and control processing. The operation device 124 is an input device that is operated by the user to give various kinds of instructions to the terminal device 12. For example, a plurality of operation elements to be pressed by the user and a touch panel that detects the contact by the user are preferably used as the operation device 124. The communication device 123 communicates with other terminals via a communication network, such as a mobile communication network or the Internet.

The storage device 122 is composed of known recording media, such as semiconductor recording media or magnetic recording media and stores programs to be executed by the control device 121 and various kinds of data to be used by the control device 121. The storage device 122 according to the first embodiment stores a plurality of contents C. Each content C contains a voice relating to a guide voice or an image (for example, a still image, a moving image and a character string). For example, the contents C representing various kinds of information, such as the character strings of the pronunciation contents of guide voices and the character strings obtained by translating the pronunciation contents into other languages, are stored in the storage device 122. As exemplified in Fig. 2, to each content C of the storage device 122, an identification information item D for uniquely identifying the content C is added. For example, a plurality of contents C transmitted from a distribution device (not shown), such as a web server, and received by the communication device 123 is stored in the storage device 122 in advance.

The reproduction device 125 reproduces the contents C stored in the storage device 122. More specifically, a display device (for example, a liquid crystal display panel) for displaying the images of the contents C or a sound emission device (for example, a speaker or a headphone) for emitting the sounds of the contents C is used as the reproduction device 125. The sound collection device 126 is a sound device for collecting surrounding sounds and generating a sound signal SB. For example, the sound collection device 126 is used to record sounds at the time of voice speech between the terminal devices 12 and during moving image photographing.

As shown in Fig. 1, the guide system 10 according to the first embodiment is equipped with a voice guide device 22 and an information transmission device 24. Fig. 3 is a specific configuration diagram showing the voice guide device 22 and the information transmission device 24. The voice guide device 22 is an existing broadcast system to be used for voice guide and is equipped with a sound collection device 32 and a sound emission device 34 as exemplified in Fig. 3. The sound collection device 32 is a sound device (microphone) for collecting surrounding sounds and generating a voice signal G. The sound collection device 32 according to the first embodiment generates the voice signal G of the guide voice pronounced by the manager (for example, the driver or guide) of the vehicle M. The sound emission device 34 emits the sound corresponding to the voice signal G generated by the sound collection device 32 to the inside of the vehicle M. Hence, the users in the inside of the vehicle M can listen to the guide voice emitted from the sound emission device 34.

As shown in Fig. 3, the voice signal G generated by the sound collection device 32 is branched from the path leading to the sound emission device 34 and is also supplied to the information transmission device 24. The information transmission device 24 transmits the identification information item D of the content C corresponding to the guide voice of the voice signal G supplied from the sound emission device 34 to each terminal device 12 inside the vehicle M. For example, the information transmission device 24 is additionally attached to the existing voice guide device 22 having been installed initially in the vehicle M.

As exemplified in Fig. 3, the information transmission device 24 according to the first embodiment is equipped with a control device 42, a storage device 44 and a sound emission device 46. The storage device 44 is composed of known recording media, such as semiconductor recording media or magnetic recording media and stores programs to be executed by the control device 42 and various kinds of data (for example, registration information X described later) to be used by the control device 42.

The control device 42 executes the programs stored in the storage device 44, thereby carrying out various kinds of operation processing and control processing. The control device 42 according to the first embodiment achieves a plurality of functions (a voice recognition section 52, an information specifying section 54 and a signal generating section 56) for transmitting the identification information item D corresponding to the voice signal G. However, it is possible to adopt a configuration in which the respective functions of the control device 42 are distributed to a plurality of devices or a configuration in which an electronic circuit dedicated for voice processing is used to achieve part of the functions of the control device 42. An A/D converter for analog-to-digital converting the voice signal G supplied from the sound collection device 32 is not shown in the figure, for the sake of convenience.

The voice recognition section 52 shown in Fig. 3 recognizes the phrase W contained in the guide voice of the voice signal G collected by the sound collection device 32. The phrase W is represented by a character string containing a single word or a plurality of words. For the voice recognition of the voice signal G, known technologies, for example, recognition technologies using a sound model, such as HMM, and a language model indicating linguistic restrictions, can be adopted arbitrarily.

The information specifying section 54 specifies the identification information item D corresponding to the phrase W recognized by the voice recognition section 52. More specifically, the information specifying section 54 specifies the identification information item D of the content C relating to the guide voice containing the phrase W recognized by the voice recognition section 52. For example, in the case that, from the voice signal G of the guide voice (for example, the voice saying "the next stop is A station") for notifying the users of the position (the station or bus stop) where the vehicle M stops soon after the notification, the phrase W (for example, the station name, such as "A station") meaning the name of the position is recognized, the information specifying section 54 specifies the identification information item D of the content C (for example, the character string of the guide voice) relating to the position. The registration information X stored in the storage device 44, for example, is used to specify the identification information item D corresponding to the phrase W recognized by the voice recognition section 52.

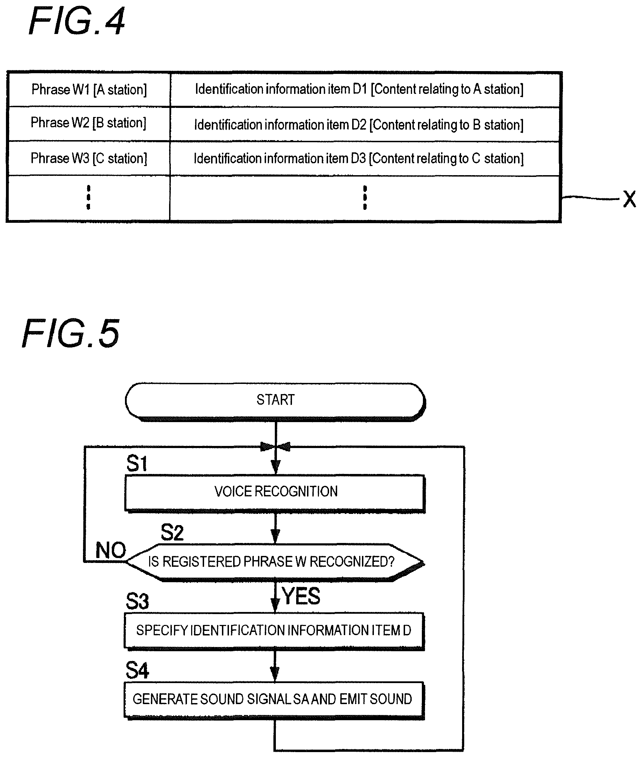

Fig. 4 is a schematic view representing the registration information X. As exemplified in Fig. 4, the registration information X according to the first embodiment is a data table in which the identification information items D (D1, D2, D3, ...) are respectively made to correspond to the plurality of phrases (hereafter referred to as "registered phrases") W (W1, W2, W3, ...) that can be contained in the guide voice. In the registration information X according to the first embodiment, to the registered phrase W that can be contained in the guide voice represented by the voice signal G, the identification information item D of the content C relating to the guide voice is made to correspond. The registered phrases W to be registered in the registration information X are selected in advance depending on the circumstances and properties of a means of transportation, such as the route (stop positions) along which the vehicle M moves.

The identification information item D specified by the information specifying section 54 shown in Fig. 3 is transmitted to each terminal device 12 in the inside of the vehicle M. Short-range radio communication is used for the transmission of the identification information item D in the first embodiment. Although a specific communication system for the short-range radio communication is arbitrary, sound communication in which the identification information item D is transmitted to each terminal device 12 by using sound generated by air vibration as a transmission medium is taken as an example in the first embodiment. More specifically, transmitting means for transmitting the identification information item D to each terminal device 12 is achieved by the signal generating section 56 and the sound emission device 46 shown in Fig. 3. The signal generating section 56 generates a sound signal SA containing the identification information item D and supplies the signal to the sound emission device 46. The sound emission device 46 is a sound device (speaker) for emitting the sound corresponding to the sound signal SA generated by the signal generating section 56. A D/A converter for digital-to-analog converting the sound signal SA generated by the signal generating section 56 is not shown in the figure, for the sake of convenience.

Although a known method is arbitrarily adopted to generate the sound signal SA containing the identification information item D, the method disclosed, for example, in WO 2010/016589 is preferable. More specifically, the signal generating section 56 sequentially executes the spread modulation of the identification information item D using a spread code and frequency conversion using a carrier wave having a predetermined frequency, thereby generating the sound signal SA containing the identification information item D as the sound component having the predetermined frequency band. The frequency band of the sound signal SA is a band in which the sound emission by the sound emission device 46 and the sound collection by the sound emission device 126 of the terminal device 12 can be carried out, and the frequency band is included in the range of a frequency band (for example, 18 kHz or more and 20 kHz or less) higher than the frequency band (for example, approximately 16 kHz or less in the audible frequency band) of the sounds, for example, voices and musical sounds, to which the users listen in an ordinary environment. Hence, the identification information item D can be transmitted from the information transmission device 24 (the sound emission device 46) to the surroundings without almost being perceived by the users inside the vehicle M. However, it is possible to adopt a configuration in which the identification information item D is emitted from the sound emission device 46 as the sound inside the audible frequency band. The first embodiment in which sound communication is adopted for the transmission of the identification information item D is advantageous in that the receivable range of the identification information item D can be controlled easily and precisely, for example, by adjusting the reproduced sound volume of the sound emission device 46.

Fig. 5 is a flow chart showing processing that is carried out so that the control device 42 of the information transmission device 24 transmits the identification information item D corresponding to the voice signal G to the terminal devices 12. For example, when the power of the information transmission device 24 is supplied, the processing shown in Fig. 5 is carried out continuously.

The voice recognition section 52 of the information transmission device 24 carries out voice recognition for the voice signal G supplied from the sound collection device 32 (at S1). The information specifying section 54 refers to the registration information X stored in the storage device 44, thereby judging whether any one of the plurality of registered phrases W having been registered in the registration information X is recognized by the voice recognition section 52 (at S2). The voice recognition by the voice recognition section 52 is repeated until a registered phrase W is recognized (NO at S2). When the voice recognition section 52 recognizes a registered phrase W (YES at S2), the information specifying section 54 specifies the identification information item D corresponding to the phrase W recognized by the voice recognition section 52 from among the plurality of identification information items D contained in the registration information X (at S3). The signal generating section 56 generates the sound signal SA containing the identification information item D specified by the information specifying section 54 and emits the signal from the sound emission device 46 (at S4). The identification information item D is transmitted, for example, repeatedly a plurality of times within a predetermined time. When the transmission of the identification information item D is completed, the voice recognition by the voice recognition section 52 is resumed (at S1). As understood from the above-mentioned explanation, in the first embodiment, the transmission of the identification information item D to each terminal device 12 is carried out by using the extraction of the registered phrase W by the voice recognition for the voice signal G as a trigger.

The transmission timing of the identification information item D is arbitrary. For example, it is possible to adopt a configuration in which the identification information item D is transmitted immediately after the registered phrase W is recognized from the voice signal G of the guide voice (before the end of the reproduction of the guide voice) or a configuration in which the identification information item D is transmitted after the end of the reproduction of the guide voice. Furthermore, since it is assumed that the length of the section in which the registered phrase W is present in the guide voice is different depending on the content and kind of the guide voice, it is preferable to use a configuration in which the section of the guide voice to be subjected to the voice recognition (that is, the section in which the registered phrase W can be contained) can be designated arbitrarily by the operation carried out for the information transmission device 24 by the manager of the vehicle M.

The sound collection device 126 of each terminal device 12 inside the vehicle M collects the sound (the sound containing the identification information item D) emitted from the sound emission device 46 of the information transmission device 24 and generates the sound signal SB. The control device 121 demodulates the sound signal SB generated by the sound collection device 126, thereby extracting the identification information item D. More specifically, the control device 121 extracts the sound component of a high frequency band (18 kHz or more and 20 kHz or less) containing the identification information item D in the sound signal SB by using, for example, a high-pass filter and causes the sound component to pass through, for example, a matching filter in which the spread code having been used for the spread modulation of the identification information item D is used as a coefficient, thereby extracting the identification information item D. As understood from the above-mentioned explanation, the sound collection device 126 according to the first embodiment functions as receiving means for receiving the identification information item D from the information transmission device 24 by sound communication.

The control device 121 causes the reproduction device 125 to reproduce the content C corresponding to the identification information item D, contained in the plurality of contents C stored in the storage device 122 and extracted from the sound signal SB. In other words, the content C (for example, the character string that is obtained by translating the pronunciation content of the guide voice into another language) relating to the phrase W contained in the guide voice is reproduced by using the emission of the guide voice by the voice guide device 22 as a trigger.

As explained above, in the first embodiment, the identification information item D corresponding to the phrase W that is recognized from the voice signal G of the guide voice emitted from the sound emission device 34 is transmitted to each terminal device 12. Hence, the user is not required to bring his/her terminal device 12 close to the sound emission device 34 in order to collect the guide voice with a sufficient SN ratio, and the user is not required to stand by in a state in which his/her terminal device 12 is brought close to the sound emission device 34 for a long time until the guide voice is emitted. In other words, with the first embodiment, the burden on the user who reproduces the content C using the terminal device 12 can be reduced. In addition, with the first embodiment, since the voice recognition is carried out for the voice signal G supplied from the sound collection device 32 to the sound emission device 34 of the voice guide device 22, this configuration is advantageous in that the phrase W of the guide voice can be recognized with high accuracy in comparison with, for example, a configuration in which voice recognition is carried out for the sound signal obtained by re-recording the guide voice emitted from the sound emission device 34 (that is, the sound signal on which noise is superimposed during the processing from the sound emission to the recording).

In a configuration (hereafter referred to as "comparative example") in which the guide voice emitted from the sound emission device is collected and the sound signal SB generated by the sound collection device 126 of the terminal device 12 is subjected to voice recognition, and the content C corresponding to the phrase W obtained as the result of the recognition is reproduced, it is necessary to collect all the sections of the guide voice emitted by the sound emission device 34 by using the sound collection device 126. In the first embodiment, the content C can be reproduced by collecting only the information item D transmitted by the information transmission device 24 by using the sound collection device 126, whereby the first embodiment is advantageous in that the sound collection by the sound collection device 126 is not required to be carried out continuously for such a long time as that required for all the sections of the guide voice. Furthermore, in the comparative example, to the guide voice emitted from the sound emission device 34, noise (for example, background noise and environmental noise) having a frequency band similar to that of the guide voice is added, whereby the accuracy of the recognition may be reduced due to the noise in the voice recognition of the sound signal SB by the terminal device 12. On the other hand, in the first embodiment, sound communication is carried out by using a high frequency band (for example, 18 kHz or more and 20 kHz or less) in which general noise assumed to be present in an ordinary environment is scarce, whereby the first embodiment is advantageous in that the influence of the noise can be reduced (more specifically, the desired content C being robust to noise can be reproduced in the terminal device 12) in comparison with the comparative example.

### <Second embodiment>

A second embodiment according to the present invention will be described. In each mode exemplified below, components being similar to those according to the first embodiment in action and function are designated by the numerals and signs having been used in the explanation of the first embodiment and their detailed explanation are omitted as necessary.

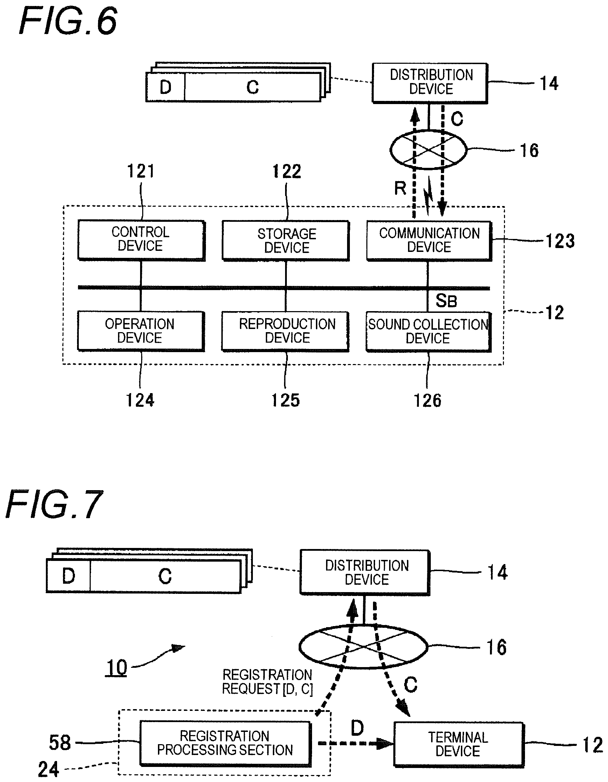

In the first embodiment, a configuration is exemplified in which a plurality of contents C has been stored in the storage device 122 of the terminal device 12 in advance. In the second embodiment, as exemplified in Fig. 6, the plurality of contents C is stored in a distribution device 14 (for example, a web server) with which the communication device 123 of the terminal device 12 can communicate via a communication network 16, such as a mobile communication network or the Internet. To each content C stored in the distribution device 14, an identification information item D for uniquely identifying the content C is added.

Upon obtaining the identification information item D transmitted from the information transmission device 24 according to a procedure similar to that according to the first embodiment, the control device 121 of the terminal device 12 transmits an information request R containing the identification information item D from the communication device 123 to the distribution device 14. The distribution device 14 selects the content C corresponding to the identification information item D contained in the information request R from among the plurality of contents C and transmits the selected content C to the terminal device 12 serving as the request source. The control device 121 of the terminal device 12 causes the reproduction device 125 to reproduce the content C that the communication device 123 has received from the distribution device 14. The content C, however, can be streaming-distributed from the distribution device 14 to the terminal device 12.

Effects similar to those of the first embodiment are also achieved in the second embodiment. Furthermore, in the second embodiment, each time the identification information item D is extracted by the terminal device 12 (that is, each time the guide voice is broadcast), the content C corresponding to the identification information item D is provided from the distribution device 14 to the terminal device 12, whereby the terminal device 12 is not required to hold the plurality of contents C. Hence, the second embodiment is advantageous in that the storage capacity required for the storage device 122 of the terminal device 12 is reduced. On the other hand, in the first embodiment, the communication with the distribution device 14 is not necessary for the reproduction of the content C by the terminal device 12, whereby the first embodiment is advantageous in that the content C can be reproduced by using the terminal device 12, for example, even in a situation in which the communication device 123 of the terminal device 12 cannot carry out communication (for example, in a situation in which the radio waves from the communication network 16 do not reach the terminal device 12 in a mountainous region or the like). Furthermore, in the second embodiment, the content C is provided from the distribution device 14 to each terminal device 12, whereby the second embodiment is advantageous in that the relationship between the identification information items D and the contents C can be changed comprehensively and also advantageous in that new contents C can be added comprehensively, in comparison with the first embodiment in which each terminal device 12 holds the content C.

### <Third embodiment>

Fig. 7 is a configuration diagram showing a guide system 10 according to a third embodiment of the present invention. As exemplified in Fig. 7, in the third embodiment, as in the case of the second embodiment, a plurality of contents C to which mutually different identification information items D are added is stored in the distribution device 14 and the content C of the identification information item D designated by the information request R from the terminal device 12 is transmitted from the distribution device 14 to the terminal device 12 serving as the request source.

As exemplified in Fig. 7, the control device 42 of the information transmission device 24 according to the third embodiment functions as a registration processing section 58 in addition to components similar to those in the first embodiment. The registration processing section 58 registers the phrase W recognized by the voice recognition for the voice signal G carried out by the voice recognition section 52 as a new content C in the distribution device 14.

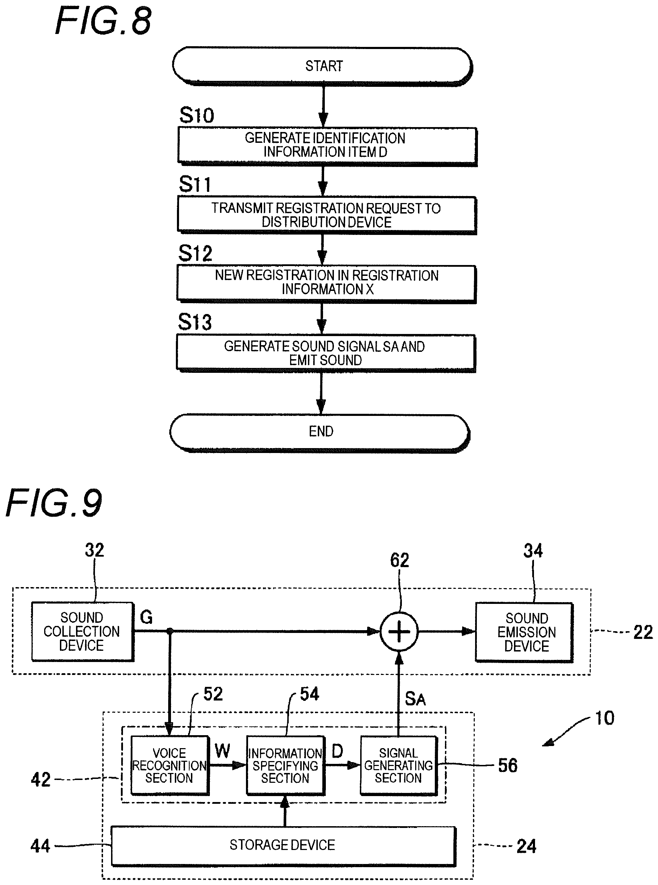

Fig. 8 is a flow chart showing the action of the registration processing section 58 according to the third embodiment. For example, in a state in which the registration of the content C (the phrase W) is instructed by the manager of the vehicle M and in the case that the voice recognition section 52 recognizes the phrase W, the processing shown in Fig. 8 is started.

The registration processing section 58 generates the identification information item D corresponding to the phrase W recognized by the voice recognition section 52 (at S10). The identification information item D is generated so as not to overlap with the phrases W having been registered in the registration information X and the identification information items D of the contents C having been stored in the distribution device 14. As exemplified in Fig. 7, the registration processing section 58 transmits a registration request that contains the content C containing the phrase W and the newly generated identification information item D to the distribution device 14 (at S11). The distribution device 14 receives the registration request transmitted from the information transmission device 24 through the communication network 16 and stores the content C and the identification information item D contained in the registration request so that they are made to correspond to each other. Furthermore, the registration processing section 58 registers the phrase W recognized by the voice recognition section 52 and the identification information item D in the registration information X of the storage device 44 (at S12) and then causes the signal generating section 56 to generate a sound signal SA containing the identification information item D (at S13). As in the case of the first embodiment, the sound corresponding to the sound signal SA generated by the signal generating section 56 is emitted from the sound emission device 46 to each terminal device 12 inside the vehicle M. In other words, the identification information item D is transmitted from the information transmission device 24 to each terminal device 12.

As in the case of the second embodiment, the terminal device 12 transmits an information request R containing the identification information item D received (that is to say, collected) from the information transmission device 24 to the distribution device 14. The distribution device 14 selects the content C corresponding to the identification information item D contained in the information request R from among the plurality of contents C and transmits the selected content C to the terminal device 12 serving as the request source. In other words, the content C (more specifically, the content C containing the phrase W recognized from the voice signal G) registered by the registration processing section 58 of the information transmission device 24 in response to the registration request (at S11) is provided to the terminal device 12.

Effects similar to those in the first and second embodiments are also achieved in the third embodiment. Furthermore, in the third embodiment, the content C corresponding to the phrase W recognized from the voice signal G is registered in the distribution device 14 and then provided to the terminal device 12, whereby the third embodiment is advantageous in that various contents C corresponding to the voice signal G, other than the contents C having been registered in the registration information X in advance, can be provided promptly to the terminal device 12. For example, in the case that a phrase W (for example, a character string "Fire!") to be recognized from the voice signal G of the guide voice for emergency use such as "Fire!" is registered as a content C in the distribution device 14, the content C for emergency use can be reproduced by the terminal device 12 without delay from the emission of the guide voice.

### <Fourth embodiment>

Fig. 9 is a configuration diagram showing a guide system 10 according to a fourth embodiment of the present invention. As exemplified in Fig. 9, the guide system 10 according to the fourth embodiment is equipped with a mixing section 62 in addition to components similar to those in the first embodiment. Furthermore, an information transmission device 24 according to the fourth embodiment is configured such that the sound emission device 46 in the configuration of the first embodiment is omitted. As exemplified in Fig. 9, the sound signal SA generated by the signal generating section 56 of the information transmission device 24 is supplied to the mixing section 62.

The mixing section 62 mixes the sound signal SA generated by the information transmission device 24 (the signal generating section 56) with the voice signal G of the guide voice generated by the sound collection device 32 and supplies the mixed signal to the sound emission device 34. Hence, the mixed sound of the sound component of the identification information item D corresponding to the phrase W of the guide voice and the guide voice is emitted from the sound emission device 34. In other words, in the fourth embodiment, the signal generating section 56, the mixing section 62 and the sound emission device 34 of the voice guide device 22 function as transmitting means for transmitting the identification information item D to each terminal device 12.

Effects similar to those in the first embodiment are also achieved in the fourth embodiment. Furthermore, in the fourth embodiment, the mixed sound of the sound component of the identification information item D and the guide voice is emitted from the sound emission device 34. In other words, the sound emission device 34 for emitting the guide voice is also used to transmit the identification information item D. Hence, the sound emission device 46 dedicated to the transmission of the identification information item D is not necessary, whereby the fourth embodiment is advantageous in that the configuration of the guide system 10 is simplified in comparison with the first embodiment. Moreover, the second embodiment and the third embodiment can also be applied to the fourth embodiment.

### <Modifications>

The respective modes exemplified above can be modified variously. Specific modes of modifications will be exemplified below. Two or more modes arbitrarily selected from the following examples can be combined appropriately within a range in which the modes do not become contradictory to one another.
(1) In each mode described above, although the case in which the guide system 10 is installed in the vehicle M, such as an electric train or a bus, is taken as an example, a facility in which the guide system 10 is installed is not limited to the above-mentioned example. For example, it is possible to install the guide system 10 in moving bodies (facilities that move while accommodating the terminal devices 12) including, for example, ships and airplanes, as well as the vehicle M. What's more, the guide systems 10 according to the above-mentioned respective modes can also be used for guide on exhibition facilities in art galleries, museums, etc.
(2) In each mode described above, although the phrase W is extracted from the voice signal G generated by the sound collection device 32, the supply source of the voice signal G is not limited to the sound collection device 32. For example, it is possible that a plurality of voice signals G representing guide voices recorded in advance is stored in a storage device in advance and that the voice signal G of the guide voice selected by the manager (for example, the driver) of the vehicle M from among the plurality of voice signals G is supplied to the sound emission device 34 and the information transmission device 24.
(3) In each mode described above, although the identification information item D is transmitted to each terminal device 12 through sound communication in which sound is used as a transmission medium, the communication system for transmitting the identification information item D is not limited to sound communication. For example, the identification information item D can be transmitted from the information transmission device 24 to the surroundings by radio communication in which electromagnetic waves such as radio waves and infrared rays are used as transmission media. As understood from the above-mentioned examples, short-range radio communication without the communication network 16 is preferable for the transmission of the identification information item D, and the sound communication in which sound is used as a transmission medium and the radio communication in which electromagnetic waves are used as transmission media are examples of the short-range radio communication.

Although, for example, electromagnetic waves, such as infrared rays, to be used for radio communication have high directivity and high straight advancing property, sound to be used for sound communication can be propagated in a wide range, whereby the identification information item D can be transmitted to numerous terminal devices 12 in the inside of the vehicle M collectively. Furthermore, in the configuration in which the identification information item D is transmitted by sound communication, the sound collection device 126 to be used to record sound at the time of voice speech between the terminal devices 12 or during moving image photographing can also be used to receive the identification information item D. Hence, this configuration is advantageous in that a radio communication device to be used exclusively for the reception of the identification information item D is not necessary.

### Reference Signs List

- 10:: guide system
- 12:: terminal device
- 14:: distribution device
- 16:: communication network
- 22:: voice guide device
- 24:: information transmission device
- 32:: sound collection device
- 34:: sound emission device
- 42:: control device
- 44:: storage device
- 46:: sound emission device
- 52:: voice recognition section
- 54:: information specifying section
- 56:: signal generating section
- 62:: mixing section
- 121:: control device
- 122:: storage device
- 123:: communication device
- 124:: operation device
- 125:: reproduction device
- 126:: sound collection device

## Claims

1. A guide system (10) comprising:
an information transmission device (24) comprising:
voice recognizing means (52) for recognizing a phrase contained in speech represented by a voice signal;
information specifying means (54) for specifying an identification information item corresponding to the phrase recognized by the voice recognizing means (52) from a plurality of identification information items corresponding to mutually different phrases; and
transmitting means (56, 46) for transmitting the identification information item specified by the information specifying means (54) to a terminal device (12) capable of reproducing a content represented by the identification information item; and
a voice guide device (22), wherein
the voice guide device includes at least one of a sound collection device (32) for collecting a sound signal or a storage device in which a sound signal is recorded in advance, and also includes a sound emission device (34) for emitting sound, and
the at least one of the sound collection device (32) and the storage device is configured to supply the voice signal to the sound emission device (34) and to the information transmission device (24).

2. The guide system (10) according to claim 1, wherein
the information specifying means (54) is arranged to refer to registration information in which a plurality of identification information items correspond to a plurality of phrases having been registered in advance, and in a case where the voice recognizing means recognizes any one of the plurality of phrases having been registered in the registration information, the information specifying means (54) is arranged to specify the identification information item corresponding to the phrase from the registration information.

3. The guide system (10) according to claim 1 or claim 2, the information transmission device (24) further comprising:
registration processing means (58) for transmitting the content representing the phrase recognized by the voice recognizing means and the identification information item corresponding to the phrase to a distribution device (14) that provides, to the terminal device (12), the content corresponding to the identification information item requested by the terminal device (12).

4. The guide system (10) according to any one of claims 1 to 3, wherein
the transmitting means (56, 46) is arranged to transmit the identification information item by a sound communication in which sound is used as a transmission medium.

5. The guide system (10) according to any one of claims 1 to 4, wherein
the voice signal contains a guide voice to be used for voice guide given from a manager to a user.

6. The guide system (10) according to claim 5, wherein
the content contains representation of information obtained by translating the phrase recognized by the voice recognizing means into another language.

7. The guide system (10) according to claim 6, wherein
the transmitting means (56, 46) is arranged to transmit the identification information item after the voice recognizing means (52) has recognized the phrase and before an end of reproduction of the guide voice.

8. The guide system (10) according to claim 6, wherein
the transmitting means (56, 46) is arranged to transmit the identification information item after an end of reproduction of the guide voice.

9. An information transmission method comprising:
supplying a voice signal, from a sound collection device (32) or a storage device in which a sound signal is recorded in advance, to a sound emission device (32) and to an information transmission device (24);
recognizing (S1), by the information transmission device (24), a phrase contained in speech represented by the voice signal;
specifying (S3), by the information transmission device (24), an identification information item corresponding to the recognized phrase from a plurality of identification information items corresponding to mutually different phrases; and
transmitting (S4), by the information transmission device (24), the specified identification information item to a terminal device (12) capable of reproducing a content represented by the identification information item.

10. A communication system comprising:
the guide system (10) according to any of claims 1 to 8; and
a terminal device (12), wherein
the terminal device (12) includes receiving means (126) for receiving the identification information item from the transmitting means (56, 46) of the information transmission device (24) and a reproduction device (125) for reproducing the content corresponding to the identification information item.

11. A vehicle (M) comprising a guide system (10) according to any of claims 1 to 8,
wherein the vehicle is configured to move while accommodating the terminal device (12).

## Patentansprüche

1. Leitsystem (10), umfassend:
eine Informationsübertragungsvorrichtung (24), umfassend:
Spracherkennungsmittel (52) zum Erkennen einer Phrase, die in Sprache beinhaltet ist, die durch ein Sprachsignal dargestellt wird;
Informationsspezifizierungsmittel (54) zum Spezifizieren eines Identifikationsinformationselements entsprechend der Phrase, die durch das Spracherkennungsmittel (52) erkannt wird, aus einer Vielzahl von Identifikationsinformationselementen, entsprechend wechselseitig unterschiedlichen Phrasen; und
Übertragungsmittel (56, 46) zum Übertragen des Identifikationsinformationselements, das durch das Informationsspezifizierungsmittel (54) spezifiziert ist, an eine Endgerätvorrichtung (12), die fähig ist, einen Inhalt zu reproduzieren, der durch das Identifikationsinformationslement dargestellt ist; und
eine Sprachleitvorrichtung (22), wobei
die Sprachleitvorrichtung mindestens eines von einer Tonsammelvorrichtung (32) zum Sammeln eines Tonsignals oder einer Speichervorrichtung, in der ein Tonsignal im Voraus aufgezeichnet wird, enthält und auch eine Tonausgabevorrichtung (34) zum Ausgeben von Ton enthält, und
die mindestens eine der Tonsammelvorrichtung (32) und der Speichervorrichtung konfiguriert ist, das Sprachsignal der Tonausgabevorrichtung (34) und der Informationsübertragungsvorrichtung (24) zuzuleiten.

2. Leitsystem (10) nach Anspruch 1, wobei
das Informationsspezifizierungsmittel (54) angeordnet ist, sich auf Registrierungsinformationen zu beziehen, in denen eine Vielzahl von Identifikationsinformationselementen einer Vielzahl von Phrasen entsprechen, die im Voraus registriert wurden, und in einem Fall, wo das Spracherkennungsmittel eine beliebige der Vielzahl von Phrasen erkennt, die in den Registrierungsinformationen registriert wurden, das Informationsspezifizierungsmittel (54) angeordnet ist, das Identifikationsinformationselement entsprechend der Phrase aus den Registrierungsinformationen zu spezifizieren.

3. Leitsystem (10) nach Anspruch 1 oder Anspruch 2, die Informationsübertragungsvorrichtung (24) weiter umfassend:
Registrierungsverarbeitungsmittel (58) zum Übertragen des Inhalts, der die Phrase darstellt, die durch das Spracherkennungsmittel erkannt wird, und des Identifikationsinformationselements, entsprechend der Phrase an eine Verteilungsvorrichtung (14), die der Endgerätvorrichtung (12) den Inhalt entsprechend dem Identifikationsinformationselement, das durch die Endgerätvorrichtung (12) angefragt wird, bereitstellt.

4. Leitsystem (10) nach einem der Ansprüche 1 bis 3, wobei
das Übertragungsmittel (56, 46) angeordnet ist, das Identifikationsinformationselement durch eine Tonkommunikation zu übertragen, in der Ton als ein Übertragungsmedium verwendet wird.

5. Leitsystem (10) nach einem der Ansprüche 1 bis 4, wobei
das Sprachsignal eine Leitsprache beinhaltet, die für Sprachleitung zu verwenden ist, die von einem Verwalter an einen Anwender gegeben wird.

6. Leitsystem (10) nach Anspruch 5, wobei
der Inhalt Darstellung von Informationen beinhaltet, die durch Übersetzen der Phrase, die durch das Spracherkennungsmittel erkannt wird, in eine andere Sprache erhalten werden.

7. Leitsystem (10) nach Anspruch 6, wobei
das Übertragungsmittel (56, 46) angeordnet ist, das Identifikationsinformationselement zu übertragen, nachdem das Spracherkennungsmittel (52) die Phrase erkannt hat und vor einem Ende einer Reproduktion der Leitsprache.

8. Leitsystem (10) nach Anspruch 6, wobei
das Übertragungsmittel (56, 46) angeordnet ist, das Identifikationsinformationselement nach einem Ende einer Reproduktion der Leitsprache zu übertragen.

9. Informationsübertragungsverfahren, umfassend:
Zuleiten eines Sprachsignals, von einer Tonsammelvorrichtung (32) oder einer Speichervorrichtung, in der ein Tonsignal im Voraus aufgezeichnet wird, an eine Tonausgabevorrichtung (32) und an eine Informationsübertragungsvorrichtung (24);
Erkennen (S1), durch die Informationsübertragungsvorrichtung (24), einer Phrase, die in Sprache beinhaltet ist, die durch das Sprachsignal dargestellt wird;
Spezifizieren (S3), durch die Informationsübertragungsvorrichtung (24), eines Identifikationsinformationselements, entsprechend der erkannten Phrase aus einer Vielzahl von Identifikationsinformationselementen, entsprechend wechselseitig unterschiedlichen Phrasen; und
Übertragen (S4), durch die Informationsübertragungsvorrichtung (24), des spezifizierten Identifikationsinformationselements an eine Endgerätvorrichtung (12), die fähig ist, einen Inhalt zu reproduzieren, der durch das Identifikationsinformationselement dargestellt ist.

10. Kommunikationssystem, umfassend:
das Leitsystem (10) nach einem der Ansprüche 1 bis 8; und
eine Endgerätvorrichtung (12), wobei
die Endgerätvorrichtung (12) Empfangsmittel (126) zum Empfangen des Identifikationsinformationselements vom Übertragungsmittel (56, 46) der Informationsübertragungsvorrichtung (24) und eine Reproduktionsvorrichtung (125) zum Reproduzieren des Inhalts entsprechend des Identifikationsinformationselements enthält.

11. Fahrzeug (M), umfassend ein Leitsystem (10) nach einem der Ansprüche 1 bis 8,
wobei das Fahrzeug konfiguriert ist, sich zu bewegen, während es die Endgerätvorrichtung (12) aufnimmt.

## Revendications

1. Système de guidage (10) comprenant :
un dispositif de transmission d'informations (24) comprenant :
des moyens de reconnaissance vocale (52) pour reconnaître une expression contenue dans une parole représentée par un signal vocal ;
des moyens de spécification d'informations (54) pour spécifier un élément d'informations d'identification correspondant à l'expression reconnue par les moyens de reconnaissance vocale (52) parmi une pluralité d'éléments d'informations d'identification correspondant à des expressions mutuellement différentes ; et
des moyens de transmission (56, 46) pour transmettre l'élément d'informations d'identification spécifié par les moyens de spécification d'informations (54) à un dispositif de terminal (12) capable de reproduire un contenu représenté par l'élément d'informations d'identification ; et
un dispositif de guidage vocal (22), dans lequel
le dispositif de guidage vocal comprend au moins l'un d'un dispositif de collecte de son (32) pour collecter un signal sonore ou d'un dispositif de mémorisation dans lequel un signal sonore est enregistré à l'avance, et comprend également un dispositif d'émission de son (34) pour émettre un son, et
ledit au moins un du dispositif de collecte de son (32) et du dispositif de mémorisation est configuré pour fournir le signal vocal au dispositif d'émission de son (34) et au dispositif de transmission d'informations (24).

2. Système de guidage (10) selon la revendication 1, dans lequel
les moyens de spécification d'informations (54) sont agencés pour se référer à des informations d'enregistrement dans lesquelles une pluralité d'éléments d'informations d'identification correspondent à une pluralité d'expressions qui ont été enregistrées à l'avance, et dans un cas dans lequel les moyens de reconnaissance vocale reconnaissent l'une quelconque de la pluralité d'expressions qui ont été enregistrées dans les informations d'enregistrement, les moyens de spécification d'informations (54) sont agencés pour spécifier l'élément d'informations d'identification correspondant à l'expression parmi les informations d'enregistrement.

3. Système de guidage (10) selon la revendication 1 ou la revendication 2, le dispositif de transmission d'informations (24) comprenant en outre :
des moyens de traitement d'enregistrement (58) pour transmettre le contenu représentant l'expression reconnue par les moyens de reconnaissance vocale et l'élément d'informations d'identification correspondant à l'expression à un dispositif de distribution (14) qui fournit, au dispositif de terminal (12), le contenu correspondant à l'élément d'informations d'identification demandé par le dispositif de terminal (12).

4. Système de guidage (10) selon l'une quelconque des revendications 1 à 3, dans lequel
les moyens de transmission (56, 46) sont agencés pour transmettre l'élément d'informations d'identification par une communication sonore dans laquelle le son est utilisé en tant que milieu de transmission.

5. Système de guidage (10) selon l'une quelconque des revendications 1 à 4, dans lequel
le signal vocal contient une voix de guidage destinée à être utilisée pour un guidage vocal donné d'un gestionnaire à un utilisateur.

6. Système de guidage (10) selon la revendication 5, dans lequel
le contenu contient une représentation d'informations obtenues en traduisant l'expression reconnue par les moyens de reconnaissance vocale dans une autre langue.

7. Système de guidage (10) selon la revendication 6, dans lequel
les moyens de transmission (56, 46) sont agencés pour transmettre l'élément d'informations d'identification après que les moyens de reconnaissance vocale (52) ont reconnu l'expression et avant une fin de reproduction de la voix de guidage.

8. Système de guidage (10) selon la revendication 6, dans lequel
les moyens de transmission (56, 46) sont agencés pour transmettre l'élément d'informations d'identification après une fin de reproduction de la voix de guidage.

9. Procédé de transmission d'informations comprenant :
la fourniture d'un signal vocal, par un dispositif de collecte de son (32) ou un dispositif de mémorisation dans lequel un signal sonore est enregistré à l'avance, à un dispositif d'émission de son (32) et à un dispositif de transmission d'informations (24) ;
la reconnaissance (S1), par le dispositif de transmission d'informations (24), d'une expression contenue dans une parole représentée par le signal vocal ;
la spécification (S3), par le dispositif de transmission d'informations (24), d'un élément d'informations d'identification correspondant à l'expression reconnue parmi une pluralité d'éléments d'informations d'identification correspondant à des expressions mutuellement différentes ; et
la transmission (S4), par le dispositif de transmission d'informations (24), de l'élément d'informations d'identification spécifié à un dispositif de terminal (12) capable de reproduire un contenu représenté par l'élément d'informations d'identification.

10. Système de communication comprenant :
le système de guidage (10) selon l'une quelconque des revendications 1 à 8 ; et
un dispositif de terminal (12), dans lequel
le dispositif de terminal (12) comprend des moyens de réception (126) pour recevoir l'élément d'informations d'identification des moyens de transmission (56, 46) du dispositif de transmission d'informations (24) et un dispositif de reproduction (125) pour reproduire le contenu correspondant à l'élément d'informations d'identification.

11. Véhicule (M) comprenant un système de guidage (10) selon l'une quelconque des revendications 1 à 8,
dans lequel le véhicule est configuré pour se déplacer alors qu'il loge le dispositif de terminal (12).
